Europäisches Patentamt

European Patent Office

Office européen des brevets

(11) Publication number: **0 184 890**
**B1**

(12) **EUROPEAN PATENT SPECIFICATION**

(45) Date of publication of patent specification: **28.11.90**

(21) Application number: **85202041.1**

(22) Date of filing: **10.12.85**

(51) Int. Cl.⁵: **A 01 B 15/10,** A 01 B 3/42,
A 01 B 61/04, A 01 B 15/14

(54) **Plough.**

(30) Priority: **12.12.84 NL 8403766**
**12.12.84 NL 8403767**

(43) Date of publication of application:
**18.06.86 Bulletin 86/25**

(45) Publication of the grant of the patent:
**28.11.90 Bulletin 90/48**

(84) Designated Contracting States:
**DE FR GB NL**

(56) References cited:
**CH-A- 323 833**
**DE-A-1 200 049**
**DE-C- 336 371**
**DE-C- 488 214**
**FR-A-2 293 863**
**FR-A-2 338 632**
**FR-A-2 381 451**
**GB-A-2 119 614**
**US-A-3 050 137**
**US-A-4 062 410**

(73) Proprietor: **C. van der Lely N.V.**
**Weverskade 10 P.O. Box 26**
**NL-3155 ZG Maasland (NL)**

(72) Inventor: **van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a plough having at least one plough body which includes a mouldboard that comprises at least one mouldboard portion with the aid of which the active surface of the mouldboard is variable without the necessity of removing the mouldboard portion.

A plough of this kind is known from the DE-C-336 371. With this known construction the mouldboard portion near the middle at the upperside of the mouldboard is pivotably arranged in such a way that the portion from a lower position can be brought into a higher position. This provision does not increase the length of the mouldboard in a rearward direction which can be a disadvantage when working heavy soils.

The invention now has for its object to overcome this disadvantage. In accordance with the invention the mouldboard portion is bodily slidably arranged in the longitudinal direction of the mouldboard, at the rear of the frame.

Using this provision it is possible to change rapidly and in a simple way the working length of the mouldboard at any desired instant and to adapt it to the prevailing conditions and soil types.

The DE-A- 1 200 049 relates to a plough body with a mouldboard that comprises a number of strips extending transverse to the direction of movement of the furrow slices. Each of the strips at one end is pivotally connected and at the other end by adjusting means can be adjusted in such a way that the total length of the mouldboard is increased. With this known construction the adjustment provided for each of the strips cannot be performed in a simple way and at any desired instant.

The DE-C-488 214 relates to a plough body provided with a mouldboard which at the leading side is provided with an additional portion by means of which during the ploughing manure or the like can be brought into the furrow.

The US-A-3 050 137 relates to a plough body having a mouldboard to which at its leading side a second mouldboard is added by means of which part of the furrow slice is directed in a sideward direction.

The invention will now be described in greater detail by way of example with reference to some embodiments shown in the accompanying drawings.

Figure 1 is a plan view of a plough according to the invention, in the form of a two-way plough.

Figure 2 is a side view along the arrow II in Figure 1.

Figure 3 shows, at an enlarged scale, the connection of a pair of plough bodies to the main frame beam of the plough.

Figure 4 is a view along the arrow IV of Figure 3, the main frame beam having been omitted.

Figure 5 is a view along the line V — V in Figure 3, whilst

Figure 6 is a view along the line VI — VI in Figure 3,

Figure 7 is a side view in accordance with Figure 4, the plough bodies of a pair being shown in the deflected state,

Figure 8 shows, at an enlarged scale, a view along arrow VIII in Figure 1,

Figure 9 is a view along the arrow IX in Figure 8,

Figure 10 is a plan view of a second embodiment of a plough according to the invention, whilst

Figure 11 shows, at an enlarged scale, the connection of a pair of plough bodies to the main frame beam at a plough as shown in Figure 10.

The device shown in the Figures relates to a soil tilling machine, more specifically a plough.

The plough is in the form of a threeshare two-way plough, three pairs of plough bodies having been provided, relative to the direction of travel A of the plough, one after the other to an at least substantially horizontal main frame beam 1 which extends at an angle to the direction of travel.

In the embodiment shown in the Figures, the longitudinal centre line of the main frame beam 1 encloses an angle of approximately 30° with the direction of travel A.

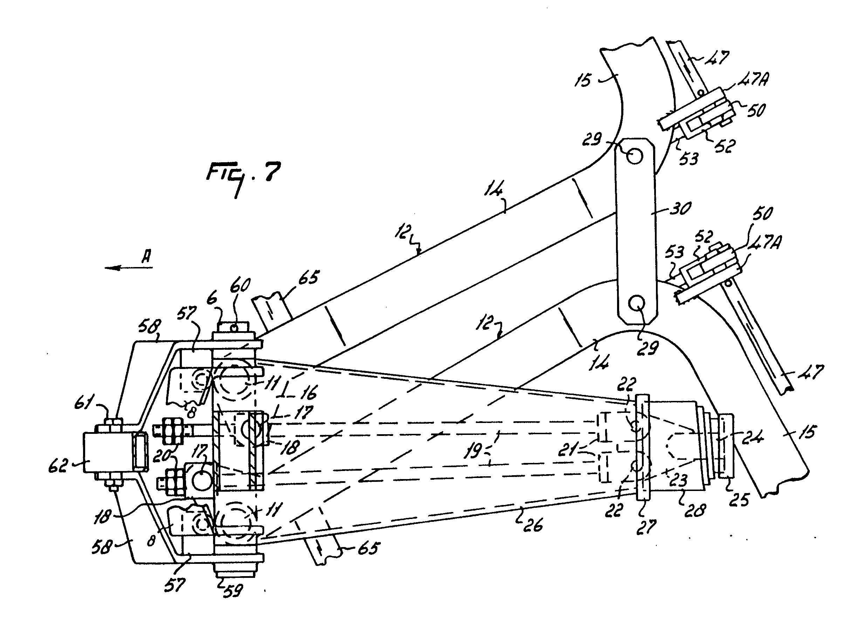

The main frame beam 1 includes an U-shaped portion 2, made of sheet material, and arranged such that the legs of the U are at least substantially in the horizontal direction (Figure 6). Near the ends, the legs of the U-shaped portion 2 are folded at right angles and are fastened to a raised plate 3, which is fixed by means of bolts 4.

Near the respective front and rear ends of the main frame beam 1 and in its centre, a support 5 through which an upwardly, preferable vertically extending, hinge pin 6 is passed, is fastened against the plate 3 by means of the bolts 4. A support 7 is provided, freely rotatably, on either side of the support 5 on the hinge pin 6.

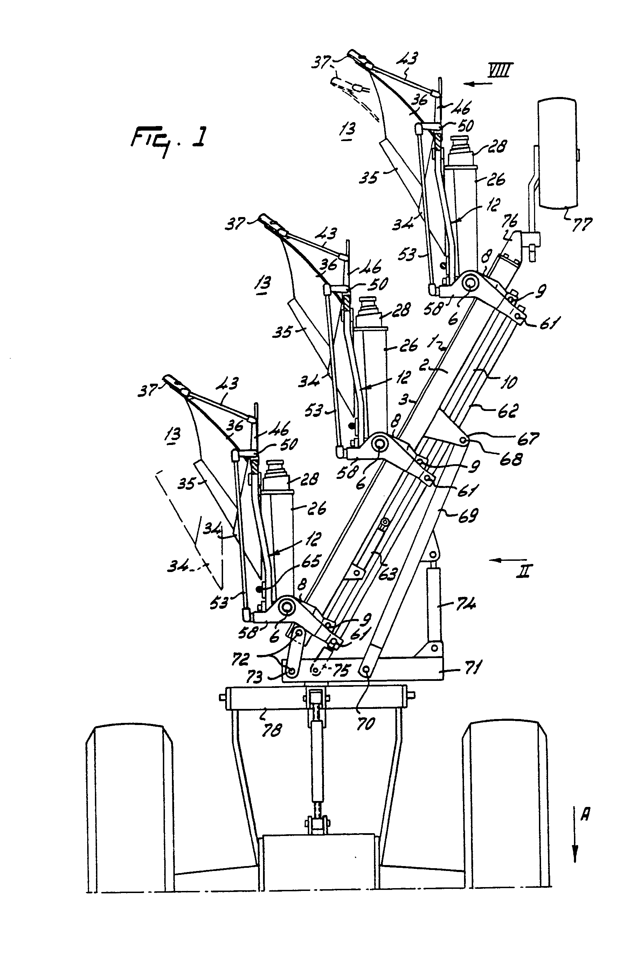

Each support 7 has an arm 8 which from the support extends at least substantially horizontally to the facing end of the main frame beam 1 and passes in the region of this side into an upwardly and downwardly bent portion, respectively. Each of the said portions, which — as shown in Figure 6 — face each other, pass into an at least substantially horizontal portion. A track rod 10 made of a hollow profile and extending along the main frame beam 1 is fitted, capable of swivelling, by means of a bolt 9 between the relevant horizontal portions. The pins 6 and the bolts 9 form the hinge points of a parallelogram (see Figure 1).

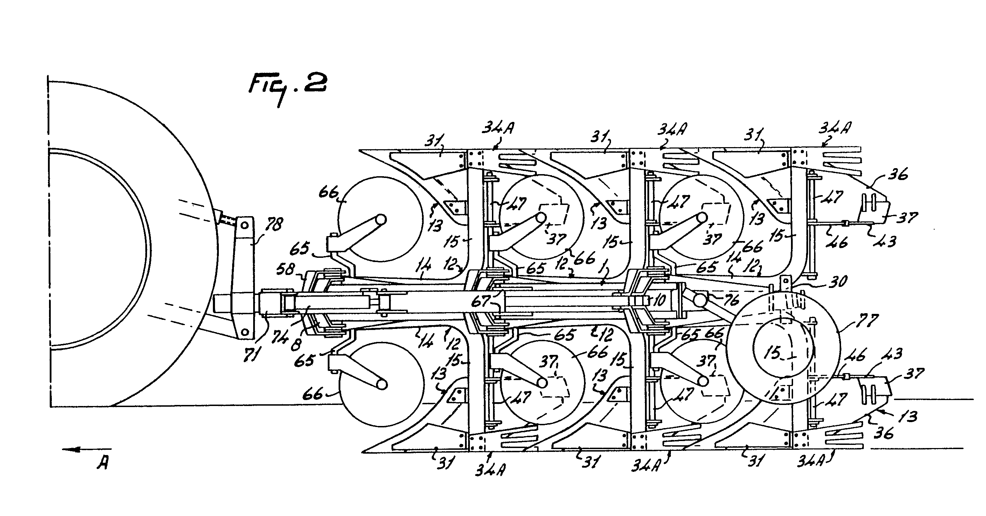

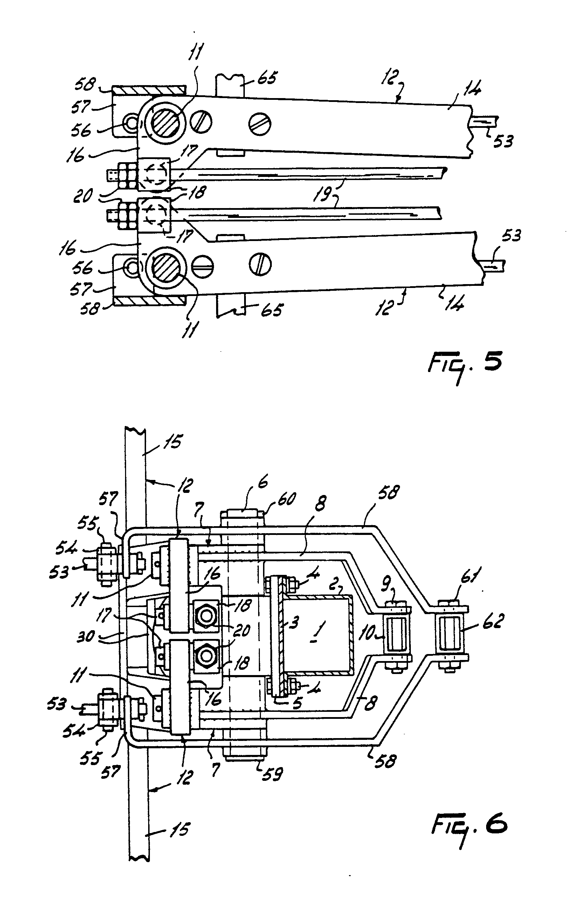

At its side remote from the arms 8, each support has a horizontal transverse shaft 11, around which there is provided, capable of swivelling, the front end of a supporting arm 12 for a plough body 13 of a pair of plough bodies. Seen from the shaft 11, each supporting arm 12 has a portion 14 which extends to the rear at least substantially in parallel with the direction of travel A (Figure 5) and which is in an at least substantially horizontal position. Via a fold, the portion 14 passes into a downwardly or upwardly extending portion 15, respectively, to which a plough body 13 is fitted (Figure 2).

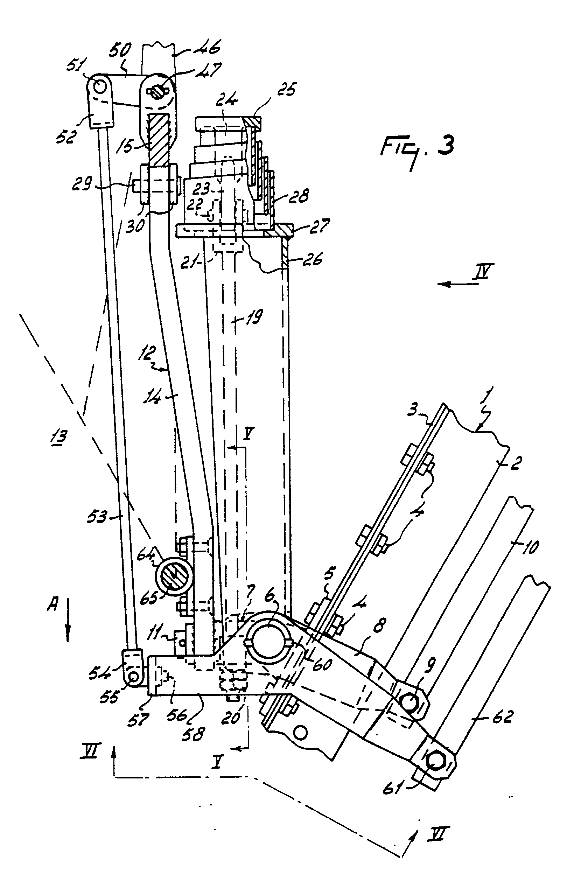

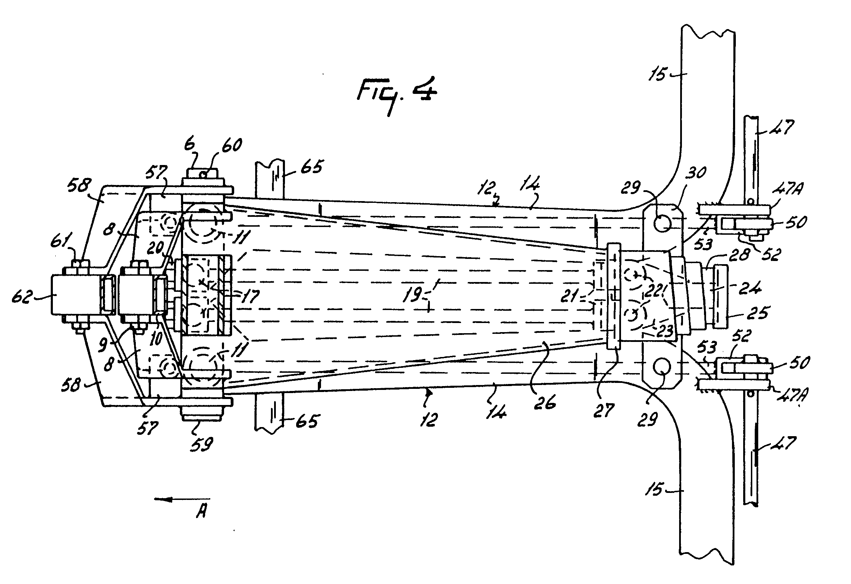

At their front sides the supporting arms 12 are provided at their facing sides with a lug 16 (Figures 5 and 7) in the region of the swivel axle 11. Each of the lugs 16 bears a horizontal hinge pin 17 which extends in parallel with a shaft 11 and is supported, freely swivably, in a lug 16. Each hinge pin 17 has a block 18 in which a towbar 19 is capable of movement. Each towbar 19 is locked by means of nuts 20 provided at the threaded end of the bar. The other end of each towbar 19 comprises a bifurcated portion 21, which is connected by means of a pin 22, which extends at least substantially in parallel with the hinge pins 17, to the base of a triangular portion 23 (Figures 3 and 4). The apex of the triangular portion 23 is provided with a pin 24 which extends at least substantially in parallel with the bars 19 and terminates in a disc 25, which disc extends transversely of the longitudinal centre line of the pin.

The towbars 19 are accommodated in a cylindrical portion 26. The cylindrical portion 26 is fastened by means of its widest side to the supports 7, so that the portion 26 with the supporting arm 12 is capable of swivelling around the swivel axle 6. In the region of the bifurcated portions 21 the cylindrical portion 26 has a cover member 27. The cover member 27 has a recessed portion in which the bifurcated portions 21 and the base of the triangular member 23 are located (Figure 4). A pressure spring 28 consisting of a resilient strip of material is positioned between the disc 25 and the cover member 27 around the triangular portion 23. The pressure spring 28 has its ends accommodated in recesses, made for that purpose, in the disc 25 or the cover member 27, respectively, thus providing centring of the spring (Figure 3).

In side elevational view (Figure 4), the cylindrical portion 26 tapers from its connection to the supports 7 towards the cover member 27. In a plan view (Figure 3), the cylindrical portion 26 is somewhat wider at the side facing the cover member 27, than at the side facing the supports 7.

By providing two folds in the portion 14 of the supporting arms 12, sufficient space is created for accommodating the cylindrical portion 26 and the pressure spring 28 (Figure 3).

Near the fold between the portions 14 and 15, the supporting arms 12 for one plough body of a pair of plough bodies are inter-connected by means of hinge pins 29 and a connecting member 30 (Figures 4 and 7), all this such that the hinge pins 29 form together with the shafts 11 a hinging quadrangle, more specifically a hinging parallelogram.

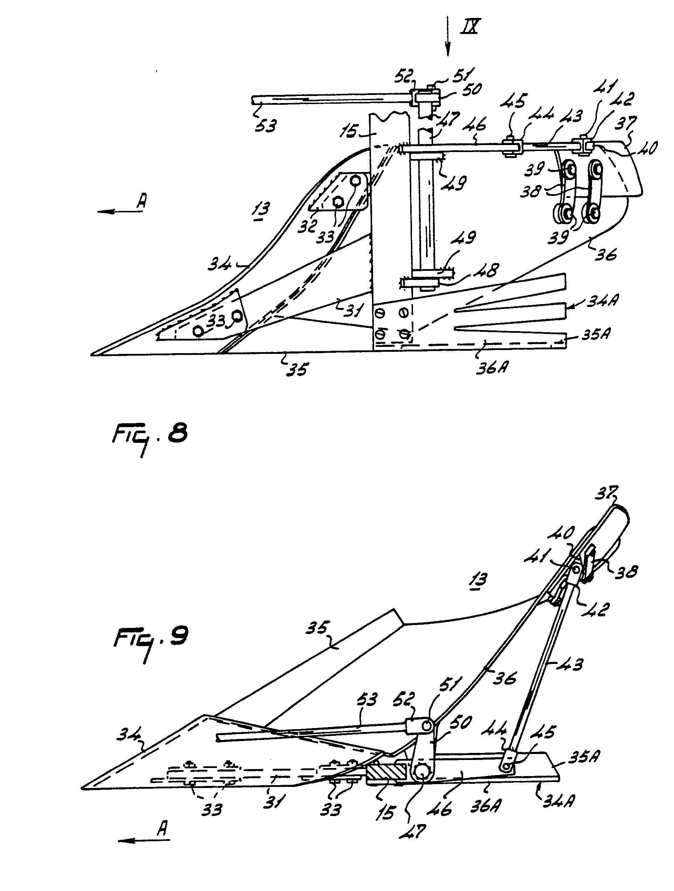

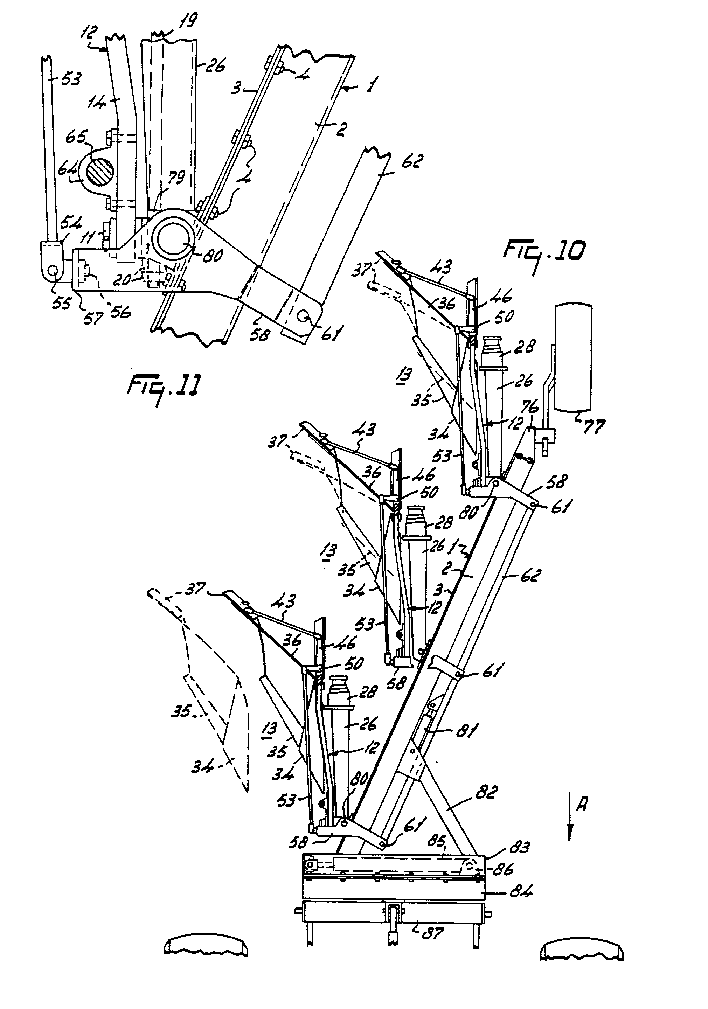

The downwardly and upwardly extending portions respectively, of a supporting arm 12 for a plough body 13 of a pair of plough bodies has at some distance from its free end a support 31 which is directed downwardly at a forward angle and upwardly at a forward angle respectively and which — as is shown in Figure 8 — tapers towards its free end. A plough body portion 34 in plate form is fastened by means of bolts 33 to the free end of the supports 31 and to a lug 32 which is provided above the support at the portion 15. At the bottom side where it has a cutting edge, the plate-shaped portion 34 follows the extension of a share 35 located behind this portion (Figure 9).

The front side, seen in the direction of travel A, of the portion 34 in the form of a plate extends from its front end, as will be obvious from Figure 8, upwardly in a somewhat S-shaped manner, this side, seen in plan view, extending from the front end along two-thirds of its length at least substantially in parallel with the support 31 and curves inwardly at its upper side. The rear end of the portion 34 in the form of a plate overlaps the front side of a portion of the plough body 13, which comprises the share 35 and a mouldboard 36 which is contiguous to the bottom side. The plate-shaped portion 34 constitutes a crusher provided in front of the portion 15, which crusher initiates loosening of a furrow slice to be cut, before the furrow slice is cut-out by means of the share 35 and is fed to the mouldboard 36. The crusher 34 constitutes at the same time a shield behind which the share 35 and the mouldboard 36 are provided, capable of swivelling, around an upward shaft in a manner still to be described.

At its upper end the mouldboard 36 extends at least substantially in the horizontal direction and at its rear passes via an at least substantially square angle into a downwardly pointing portion which extends at a downward angle to the rear (Figure 8). A mouldboard portion 37 of a predominantly rectangular shape, is provided at the rear of the mouldboard 36. The mouldboard portion 37 extends from the upper side of the mouldboard 36 downwardly through a distance which amounts to approximately one third of the height of the mouldboard. The length of the mouldboard portion 37 is approximately one and a half time the height of the portion. The connection of the mouldboard portion 37 is accomplished by means of two parallel and interspaced, upwardly directed strips 38 which are capable of pivoting by means of pins 39 relative to both the mouldboard 36 and the mouldboard portion 37. The pins 39 constitute the vertices of a hinging polygonal. Near its upper side the mouldboard portion 37 has a lug 40 which extends at least substantially horizontal and to which the bifurcated portion 42 of a rod 43 is fastened by means of a hinge pin 41. The rod 43 has its other end fastened by means of a bifurcated portion 44 and a hinge pin 45 to an arm 46 which is fastened to the portion 15 in the region of the upper side of the mouldboard 36 and extends at least substantially in the horizontal, rearward direction. The arm 46 constitutes at the same time a support for a shaft 47 which is located immediately behind the portion 15.

The shaft 47 extends at least substantially in the vertical direction and is further supported by means of a lug 48 present at the rear of the portion 15 in the region of the lower side of the support 31. Below the arm 46 and above the lug 48, the shaft is provided with supports 49 which are fastened to the rear of the mouldboard 36, all this in such a way that turning of the shaft 47 causes the mouldboard 36 and the share 35 to swivel.

Near the transition of the portion 15 and the portion 14 of the supporting arm 12, the upper side of the shaft 47 is supported by means of a lug 47A and provided with an arm 50, which extends transversely of the direction of travel A (Figure 4). A rod 53 is fastened to the arm 50 by means of a hinge pin 51 and a bifurcated portion 52 (Figure 3). The rod 53 extends at least substantially in the direction of travel A of the plough and at its front side is connected to an at least substantially horizontal hinge pin 56 by means of a bifurcated portion 54 and a hinge pin 55, which extends in parallel with the hinge pin 51. The hinge pin 56 is supported in a downwardly folded lip 57, which forms part of an arm 58, of which an at least substantially horizontal portion extends to the other side of the main frame beam 1.

Each of the arms 58 is capable of swivelling, on the shaft 6, near the centre of the at least substantially horizontal portion (Figure 5). Locking of the arms 58 and the arms 8 on the shaft 6 is ensured by means of a shoulder 59 at the lower side of the shaft 6 and a locking pin 60 passed through the upper side of the shaft. By means of their at least substantially horizontal portions, the arms 58 extend to the other side of the main frame beam 1 and pass there via a bend into a portion which extends at a downward angle or an upward angle, respectively, in such a way that the relevant portions diverge (Figure 6). Near their ends, the portions have an at least substantially horizontal portion. A track rod 62, which extends in parallel with the main frame beam is arranged, capable of hinging, between these horizontal portions, by means of a bolt 61. The track rod 62 also has a hollow profile. As can be seen from Figure 6, the track rod 10 interconnecting the arms 8, is located nearest to the main frame beam 1. The shafts 6 and the bolts 61 constitute the hinge points of a parallelogram. As is shown in Figure 1, the track rod 10 is hingeably connected between the front and center pairs of plough bodies 13 to an end of a hydraulic adjusting cylinder 63. The adjusting cylinder 63, which may be connected in a manner not further shown, to the hydraulic circuit of a tractor, is hingeably connected, to the other end of the main frame beam 1.

At the lower side of the upwardly or downwardly extending portion 15, a supporting member 34A is provided (Figures 8 and 9), which extends in parallel with the direction of travel of the plough and is located in the extension of one side of the plate-shaped portion 34, and comprises an at least substantially horizontally extending portion 35A and an upwardly extending portion 36A. The upwardly extending portion 36A has a width which increases from the front to the rear (Figure 8), with a largest width of approximately 15 cms, and has recesses which taper from the rear and reach to beyond the center in such a way that the rear side comprises three elements in the form of strips.

Just behind the shaft 11 around which the supporting arm 12 swivels, the supporting arm is provided by means of a support 64 which is fastened by bolts, with downwardly and upwardly extending, swivable supports 65 for a disc coulter 66 (Figure 3). The respective disc coulters 66 are located before each one of the respective plough bodies 13 of a pair (Figure 2).

Near the centre, the main frame beam 1 has, at the side facing the track rods 10 and 62, a lug 67 to which a frame beam 69 is fastened by means of an at least substantially vertical hinge pin 68. By means of its front side the frame beam 69 is connected by means of an at least substantially vertical hinge pin 70 to the centre of a cross-beam 71. The front end of the main frame beam 1 is hingeably connected to one end of the cross-beam by means of at least substantially vertical hinge pins 72 and a connecting member 73 (Figure 1).

Arranged between the centre of the frame beam 69 and the other end of the cross-beam 71 is a hydraulic adjusting cylinder 74. By means of the adjusting cylinder 74, the frame beam 69 and the connecting member 73 which form guide means, the main frame beam 1 is capable of lateral movement relative to the cross-beam 71. Hereby the foremost pair of plough bodies is capable of assuming, for example, a position as represented by broken lines in Figure 1. The front end of the track rod 62 is hingeably connected to an end of a hydraulic adjusting cylinder 75, which is pivotably connected to the cross-beam 71. During operation, both the adjusting cylinder 74 and the adjusting cylinder 75 are connected in a manner not shown to the hydraulic circuit of a tractor.

The rear of the main frame beam 1 has a support 76 to which a ground wheel 77 is fastened which in a manner not shown is adjustable for height and can swivel around a cross axle such, that the ground wheel contacts the soil in both working positions of the plough.

In a manner not shown, the cross-beam 71 is swivable by means of a turn-over mechanism including a shaft which extends in the direction of travel A, relative to a frame portion 78 which comprises a three-point linking system for coupling the whole assembly to the three-point hitch of a tractor.

The plough described in the foregoing operates as follows.

During operation, the plough is coupled by means of the three-point linking system of the frame portion 78 to the three-point hitch of a tractor, and the tractor moves the plough in a direction as illustrated by arrow A. In this situation, the operative plough bodies 13 of the respective pairs of plough bodies can assume a position as illustrated in Figure 1, a furrow slice being cut-out and turned-over during the travel, which is moved to the right. For cutting the furrow slice, the disc coulter makes a first cut in the soil, where after, with the aid of the plate-shaped member 34, which has a soil breaking function, the soil is broken still further, before the furrow slice is cut out by the share 35 located behind the plate-shaped member and is turned aside whilst being reversed by the mouldboard 36.

During operation, the supporting member 34A provided at the bottom side of the portion 15 and extending in the direction of travel A, is supported via the portion 35A by the bottom of the furrow, whilst the supporting member bears against the raised wall of the furrow by means of the upwardly extending portion 36A, whose width increases from its connecting point onwards. The portion 36A which, from a point located before the centre, has recesses of increasing width (Figure 8), all this such that parts in the form of strips are created in the longitudinal direction of the portion, achieves an efficient support for compensating for lateral forces, the friction then occurring being minimal.

During operation the operational plough body 13 is kept in its mid-position by means of a towbar 19 and the pressure spring 28 acting on this towbar.

If during operation the forces acting on the operative plough body 13 become of an unwanted intensity, the whole assembly of the plough bodies 13 can deflect upwards in a manner as shown in Figure 7, around the shafts 11 and the hinge pins 29. In this situation, the lower towbar 19, which constitutes a coupling means, is moved to the left against the spring action of the spring 28, so that a downwardly directed force is exerted on the supporting arm 12 for the plough body, which force tries to return the plough body as rapidly as possible to its original mid-position. The upper towbar 19 which also constitutes a coupling means, is relieved during deflection of the plough body, as this bar moves to the left, whilst sliding through the block 18.

For the plough described in the foregoing, the position of the respective plough bodies 13 can be adapted to the soil conditions and the rate of ploughing. Using the hydraulic adjusting cylinder 63, it is possible to move, from the tractor, the track rod 10 nearest to the main frame beam to the rear in its longitudinal direction via the parallelogram formed by the shafts 6 and the bolts 9, it being possible for the plough bodies 13, starting from their positions shown in Figure 1 (smallest working width) to assume a position in which the plough body occupies a more transverse position relative to the direction of travel and the working width is consequently increased.

By adjusting the track rod 62 remotest from the main frame beam 1, using the adjusting cylinder 75, it is possible to readjust from the tractor the share 35 and the mouldboard 36 of the plough body 13 around the longitudinal centre line of the shaft 47 with the aid of the parallelogram formed by the shafts 6 and the bolts 61, the arms 58 and the rods 53, the whole assembly then being moved to a more transverse position relative to the direction of travel A. During readjustment of the share 55 and the mouldboard 36 the mouldboard portion 37 located at the rear of the mouldboard is moved substantially in parallel with itself by means of the rod 43. Thus, when the share 35

and the mouldboard 36 occupy a less transverse position, the mouldboard portion present at the rear will be moved to the rear by means of the hinging strips 38, which implies that the active surface of the mouldboard 36 increases and the soil moves for a longer period of time along the mouldboard before it is released. This is of significance, for example during ploughing of heavy soils, the mouldboard then being adjusted to a less transverse position relative to the direction of travel. When the mouldboard is adjusted to a more transverse position, the portion at the rear of the mouldboard advances, that is to say the overall length of the mouldboard becomes shorter, which is the mouldboard position suitable for use when ploughing lighter soils. Because of the precense of the crusher member 34 in the form of a plate, an efficient shielding is obtained behind which the share (35) and mouldboard (36) can be readjusted without the connection to the portion 34 being affected negatively.

The Figures 10 and 11 show an embodiment of a plough according to the invention in which the respective plough bodies 13 of the pairs can deflect during operation from a central position around a transverse axle 11 in a similar manner as in the plough embodiment described above. Corresponding components are given the same reference numerals. In this embodiment, the cylindrical portion 26 is rigidly connected to a support 79 which is fastened to the plate 3 by means of the bolts 4. The respective shafts 11 are secured to the support 79. The upper side of the support 79 has an upwardly directed stud 80 around which the arm 58 is capable of swivelling, which by means of one end is connected in a similar manner as in the preceding embodiment to a rod 53 for adjusting the share 35, the mouldboard 36 and the mouldboard portion 37. The other end of the arm 58 is connected in the manner already described to the track rod 62 extending along the main frame beam 1.

In this embodiment, the track rod 62 is hingeably connected, by means of an hydraulic adjusting cylinder 81 which can also be operated from the tractor, to a beam 82 which is fastened to the main frame beam 1 at a forward angle and, together with the front end of the main frame beam 1, is connected to a crossbeam 83. The crossbeam 83 is capable of movement in the longitudinal direction to a crossbeam 84 located in front thereof. For the lateral movement a hydraulic adjusting cylinder 85 is provided, one end of which is connected to an end of the crossbeam 83 and the other end to a lug 86 on the crossbeam 84, in such a way that the plough bodies 13 can assume a position as illustrated by means of broken lines for the front pair of plough bodies. In this manner it is possible to change the working width of the plough and optionally to place the front pair of plough bodies in the furrow already present. The transverse motion is of specific advantage for operation along ditch edges and fences. The same holds for the transverse motion of the plough according to the preceding embodiment.

Also in this embodiment the front crossbeam 84 is connected by means of a revolving mechanism, not further shown, which comprises a shaft extending in the direction of travel A, to a frame portion 87 having a three-point connection for coupling to the three-point lever lifting system of a tractor.

In the embodiments shown in the Figures 10 and 11 it is possible to readjust with the aid of the hydraulic adjusting cylinder 81 via the track rod 62 the position of the share 35, the mouldboard 36 and simultaneously therewith the mould board portion 37 for adapting the plough to the prevailing circumstances, such as the type of soil or the required rate of travel. As was also the case in the preceding embodiment, the mouldboard portion 37 is advanced relative to the mouldboard 36 in the event of a more transverse mouldboard position, so that the effective surface area is reduced, whilst in contradistinction thereto, when the mouldboard portion is adjusted to a less transverse position, the mouldboard portion 37 moves outwards, as a result of which the effective surface area of the whole assembly is increased.

## Claims

1. A plough having at least one plough body (13) which includes a mouldboard (36) that comprises at least one mouldboard portion (37) with the aid of which the active surface of the mouldboard (36) is variable without the necessity of removing the mouldboard portion (37), characterized in that the mouldboard portion (37) is bodily slidably arranged in the longitudinal direction of the mouldboard, at the rear of same.

2. A plough as claimed in claim 1, characterized in that the said mouldboard portion (37) is predominantly rectangular in shape.

3. A plough as claimed in claim 1 or 2, characterized in that the said mouldboard portion (37) extends from the upperside of the mouldboard (36) downwardly through a distance which amounts to approximately one third of the height of the mouldboard.

4. A plough as claimed in any one of the preceding claims, characterized in that together with a share (35) the mouldboard (36) is provided capable of swivelling around an upwardly directed axis (47) to a supporting arm (15) for the plough body (13).

5. A plough as claimed in claim 4, characterized in that the upwardly directed axis (47) extends at least substantially in the vertical direction and is located behind the mouldboard (36).

6. A plough as claimed in claim 4 or 5, characterized in that the said mouldboard portion (37) is connected to the rear of the mouldboard (36) by means of a hinging polygonal (38, 39) and to a supporting arm (15) for the plough body (13), in such a way that when the share (35) and the mouldboard (36) are readjusted, the mouldboard portion (37) is shifted relative to the mouldboard (36).

7. A plough as claimed in any one of the preceding claims, characterized in that a crusher member (34) is located, relative to the direction of travel, before a portion of the supporting arm (15) to which a share (35) and the mouldboard (36) of the plough body (13) are fastened and the lower side of the crusher member (34) has a cutting edge which is located at least substantially in the extension of the cutting edge of the share (35) of the plough body (13).

8. A plough as claimed in any one of the preceding claims, characterized in that a plough body (13) includes a supporting member (34A) which during operation is in contact with the furrow walls and comprises a plurality of strips.

9. A plough as claimed in claim 8, characterized in that the supporting member (34A) has an at least substantially horizontal portion (35A) and an upright portion (36A), the horizontal portion (35A) being at least substantially rectangular and, during operation, being in contact with the bottom of the furrow and the upright portion (36A) having a width which increases from the front to the rear and bearing against the upright furrow wall whereby this portion has longitudinal recesses, which extend from the rear side to beyond halfway this portion and taper from the rear of the portion to the front.

10. A plough as claimed in any one of the preceding claims, characterized in that two plough bodies (13) are supported capable of swivelling around two at least substantially horizontal axes (11, 29), and also around an upwardly directed axis (6).

11. A plough as claimed in claim 10, characterized in that the plough bodies (13) are connected via coupling means (19) to a spring-loaded mechanism (23 — 28)in such a way that on deflection of a plough body (13) one coupling means is made inoperative, whilst the other one is put into operation.

12. A plough as claimed in claim 11, characterized in that the spring-loaded mechanism (23 — 28) tries to keep the plough body (13) in a central position via a coupling means (19).

13. A plough as claimed in claim 11 or 12, characterized in that the plough is a two-way plough having at least one pair of plough bodies (13) and that a pivotable supporting arm (12) for each plough body (13) is connected to a coupling means (19) constituted by a towbar connected to a spring-loaded mechanism (23 — 28).

14. A plough as claimed in claim 13, characterized in that a towbar (19) extends to the rear from the front side of a supporting arm (12) for a plough body (13), and the hinging connection between a towbar (19) and the supporting arm (12) for a plough body (13) permits of a towbar shift in the longitudinal direction, the towbars (19) extending at least substantially in parallel with each other and being connected to a common support (23) which is movable against the action of a pressure spring.

15. A plough as claimed in claim 13 or 14, characterized in that the supporting arms (12) of the plough bodies (13) are interconnected capable of swivelling, by means of an intermediate section (30).

16. A plough as claimed in any one of the claims 12 — 14, characterized in that, together with the plough bodies (13) which are swivable around an upwardly directed axis (47), the towbars (19) are swivable around an upwardly directed axis (6) which is located in the region of the hinging connection of the supporting arms (12) for the plough bodies (13).

17. A plough as claimed in claim 16, characterized in that a coulter (66) is provided near the upward axis (6) around which a plough body (13) is swivable.

**Patentansprüche**

1. Pflug mit mindestens einem Pflugkörper (13), der ein Streichblech (36) mit mindestens einem Streichblechteil (37) aufweist, mittels dessen die wirksame Oberfläche des Streichbleches (36) veränderbar ist, ohne daß das Streichblechteil (37) entfernt werden muß, dadurch gekennzeichnet, daß das Streichblechteil (37) in Längsrichtung des Streichbleches an dessen Rückseite verschiebbar angeordnet ist.

2. Pflug nach Anspruch 1, dadurch gekennzeichnet, daß das Streichblechteil (37) eine überwiegend rechteckige Form hat.

3. Pflug nach Anspruch 1 oder 2, dadurch gekennzeichnet, daß sich das Streichblechteil (37) von der Oberseite des Streichbleches (36) nach unten um ein Maß erstreckt, das etwa einem Drittel der Höhe des Streichbleches entspricht.

4. Pflug nach einem der vorhergehenden Ansprüche, dadurch gekennzeichnet, daß das Streichblech (36) zusammen mit einem Schar (35) um eine aufwärts gerichtete Achse (47) zu einem Tragarm des Pflugkörpers (13) schwenkbar ist.

5. Pflug nach Anspruch 4, dadurch gekennzeichnet, daß die aufwärts gerichtete Achse (47) mindestens annähernd in vertikaler Richtung verläuft und sich hinter dem Streichblech (36) befindet.

6. Pflug nach Anspruch 4 oder 5, dadurch gekennzeichnet, daß das Streichblechteil (37) mit der Rückseite des Streichbleches (36) über ein Mehrgelenkgestänge (38, 39) und mit einem Tragarm (15) des Pflugkörpers (13) verbunden ist, derart, daß das Streichblechteil (37) relativ zu dem Streichblech (36) verlagert wird, wenn das Schar (35) und das Streichblech (37) zurückgestellt werden.

7. Pflug nach einem der vorhergehenden Ansprüche, dadurch gekennzeichnet, daß ein Brechwerkzeug (34) in bezug auf die Fahrtrichtung vor einem Teil des Tragarmes (15) angeordnet ist, an dem ein Schar (35) und das Streichblech (36) des Pflugkörpers (13) befestigt sind, und daß das Brechwerkzeug (34) eine Schneidkante aufweist, die mindestens annähernd in der Verlängerung der Schneide des Schares (35) des Pflugkörpers (13) angeordnet ist.

8. Pflug nach einem der vorhergehenden Ansprüche, dadurch gekennzeichnet, daß ein Pflugkörper (13) ein Tragglied (34A) aufweist, das im Betrieb mit den Furchenwänden in Berührung ist und mehrere Streifen hat.

9. Pflug nach Anspruch 8, dadurch gekennzeichnet, daß das Tragglied (34A) einen mindestens annähernd horizontalen Teil (35A) und einen aufwärts gerichteten Teil (36A) aufweist, daß der horizontale Teil (35A) mindestens annähernd rechteckig ist und im Betrieb Berührung mit dem Furchenboden hat, und daß der aufwärts gerichtete Teil (36A) eine von vorne nach hinten zunehmende Breite hat und an der Furchenwand anliegt sowie Längsausnehmungen aufweist, die von der Rückseite bis über die Mitte dieses Teiles hinaus reichen und sich von der Rückseite nach vorne verjüngen.

10. Pflug nach nach einem der vorhergehenden Ansprüche, dadurch gekennzeichnet, daß zwei Pflugkörper (13) um zwei im wesentlichen horizontale Achsen (11, 29) und um eine aufwärts gerichtete Achse (6) schwenkbeweglich gelagert sind.

11. Pflug nach Anspruch 10, dadurch gekennzeichnet, daß die Pflugkörper (13) über eine Kupplungsvorrichtung (19) mit einem federbelasteten Mechanismus (23-28) verbunden sind, derart, daß beim Ausweichen eines Pflugkörpers (13) eine Kupplung unwirksam wird, während die andere Kupplung wirksam gemacht wird.

12. Pflug nach Anspruch 11, dadurch gekennzeichnet, daß der federbelastete Mechanismus (23-28) den Pflugkörper (13) über eine Kupplungsvorrichtung (19) in einer Mittellage zu halten sucht.

13. Pflug nach Anspruch 11 oder 12, dadurch gekennzeichnet, daß der Pflug ein Kehrpflug ist, der mindestens ein Paar Pflugkörper (13) aufweist, und daß ein schwenkbarer Tragarm (12) für jeden Pflugkörper (13) mit einer Kupplungsvorrichtung (19) verbunden ist, die von einer Zugstange gebildet ist, welche mit einem federberlasteten Mechanismus (23-28) verbunden ist.

14. Pflug nach Anspruch 13, dadurch gekennzeichnet, daß sich eine Zugstange (19) von der Vorderseite eines Tragarmes (12) für einen Pflugkörper (13) nach hinten erstreckt, und daß die Gelenkverbindung zwischen einer Zugstange (19) und dem Tragarm (12) für einen Pflugkörper (13) eine Verlagerung der Zugstange in Längsrichtung erlaubt, wobei sich die Zugstangen (19) mindestens annähernd parallel zueinander erstrecken und mit einem gemeinsamen Träger (23) verbunden sind, der gegen die Kraft einer Druckfeder beweglich ist.

15. Pflug nach Anspruch 13 oder 14, dadurch gekennzeichnet, daß die Tragarme (12) der Pflugkörper (13) mittels eines Zwischenabschnittes (30) schwenkbeweglich miteinander verbunden sind.

16. Pflug nach einem der Ansprüche 12 bis 14, dadurch gekennzeichnet, daß die Zugstangen (19) zusammen mit den um eine aufwärts gerichtete Achse (47) schwenkbeweglichen Pflugkörpern (13) um eine aufwärts gerichtete Achse (6) schwenkbeweglich sind, die sich im Bereich der Gelenkverbindung der Tragarme (12) für die Pflugkörper (13) befindet.

17. Pflug nach Anspruch 16, dadurch gekennzeichnet, daß nahe der aufwärts gerichteten Achse (6), um die ein Pflugkörper (13) schwenkbeweglich ist, ein Sech (66) vorgesehen ist.

## Revendications

1. Charrue ayant au moins un corps de charrue (13) qui comprend un versoir (36) comportant au moins une partie de versoir (37) à l'aide de laquelle la surface active du versoir (36) est variable sans la nécessité de démonter la partie de versoir (37), caractérisée en ce que ladite partie de versoir (37) est arrangée de manière à coulisser toute entière dans le sens longitudinal du versoir à l'arrière de celui-ci.

2. Charrue selon la revendication 1, caractérisée en ce que ladite partie du versoir (37) est de forme rectangulaire, de manière prédominante.

3. Charrue selon la revendication 1 ou 2, caractérisée en ce que ladite partie du versoir (37) s'étend vers le bas à partir du côté supérieur du versoir (36) sur une distance égale à environ un tiers de la hauteur du versoir.

4. Charrue selon l'une quelconque des revendications précédentes, caractérisée en ce que, conjointement avec un soc (35), le versoir (36) est prévu pour pouvoir pivoter autour d'un axe (47) dirigé vers le haut, par rapport à un bras de support (15) du corps de charrue (13).

5. Charrue selon la revendication 4, caractérisée en ce que l'axe (47) dirigé vers le haut s'étend au moins pratiquement dans le sens vertical et est situé derrière le versoir (36).

6. Charrue selon la revendication 4 ou 5, caractérisée en ce que ladite partie du versoir (37) est reliée à l'arrière du versoir (36) au moyen d'un polygone articulé (38, 39) et à un bras de support (15) du corps de charrue (13), de telle manière que quand le soc (35) et le versoir (36) sont réajustés, la partie du versoir (37) est déplacée par rapport au versoir (36).

7. Charrue selon l'une quelconque des revendications précédentes, caractérisée en ce qu'un organe écraseur (34) est situé, par rapport au sens de marche, devant une partie du bras de support (15) auquel sont attachés un soc (35) et le versoir (36) du corps de charrue (13), et le côté inférieur de l'organe écraseur (34) a un bord coupant qui est situé au moins sensiblement dans le prolongement du bord coupant du soc (35) du corps de charrue (13).

8. Charrue selon l'une quelconque des revendications précédentes, caractérisée en ce qu'un corps de charrue (13) comporte un organe de support (34A) qui est, pendant le travail, en contact avec les parois du sillon et comporte une pluralité de bandes.

9. Charrue selon la revendication 8, caractérisée en ce que l'organe de support (34A) a un partie (35A) au moins sensiblement horizontale et une partie (36A) dirigée vers le haut, la partie horizontale (35A) étant au moins sensiblement rectangulaire et étant, pendant le travail, en contact avec le fond du sillon, et la partie (36A) dirigée vers le haut ayant une largeur croissante de l'avant à l'arrière et portant contre la paroi verticale du sillon, cette partie ayant des renfoncements longitudinaux qui s'étendent du côté postérieur jusqu'au delà du milieu de cette partie et qui diminuent de largeur à partir de l'arrière de ladite partie jusqu'à l'avant de celle-ci.

10. Charrue selon l'une quelconque des revendications précédentes, caractérisée en ce que deux corps de charrue (13) sont supportés en étant capables de pivoter autour de deux axes (11, 29) qui sont au moins sensiblement horizontaux, et aussi autour d'un axe (6) dirigé vers le haut.

11. Charrue selon la revendication 10, caractérisée en ce que les corps de charrue (13) sont reliés, par l'intermédiaire de moyens d'accouplement (19) à un mécanisme (23-28) sollicité par un ressort, de telle manière que, lors de la déflexion d'un corps de charrue (13), un des moyens d'accouplement est mis hors service, tandis que l'autre est mis en service.

12. Charrue selon la revendication 11, caractérisée en ce que le mécanisme (23-28) sollicité par un ressort tend à maintenir le corps de charrue (13) en position centrale par l'intermédiaire d'un des moyens d'accouplement (19).

13. Charrue selon la revendication 11 ou 12, caractérisée en ce que la charrue est une charrue réversible ayant au moins une paire de corps de charrue (13) et en ce qu'un bras de support pivotant (12) pour chaque corps de charrue (13) est relié à un moyen d'accouplement (19) constitué par un tirant relié à un mécanisme (23-28) sollicité par un ressort.

14. Charrue selon la revendication 13, caractérisée en ce qu'un tirant (19) s'étend vers l'arrière à partir du côté antérieur d'un bras de support (12) d'un corps de charrue (13) et en ce que la liaison articulée entre un tirant (19) et le bras de support (12) d'un corps de charrue (13) permet une translation d'un tirant dans le sens longitudinal, les tirants (19) s'étendant au moins sensiblement parallèlement l'un à l'autre et étant reliés à un support commun (23) qui est mobile contre l'action d'un ressort de pression.

15. Charrue selon la revendication 13 ou 14, caractérisée en ce que les bras de support (12) des corps de charrue (13) sont interconnectés en étant capables de pivoter, au moyen d'une section intermédiaire (30).

16. Charrue selon l'une quelconque des revendications 12 à 14, caractérisée en ce que, conjointement avec les corps de charrue (13) qui peuvent pivoter autour d'un axe (47) dirigé vers le haut, les tirants (19) peuvent pivoter autour d'un axe (6) dirigé vers le haut, lequel est situé dans la région de la liaison articulée des bras de support (12) des corps de charrue.

17. Charrue selon la revendication 16, caractérisée en ce qu'un coutre (66) est prévu près de l'axe (6) dirigé vers le haut, autour duquel peut pivoter un corps de charrue (13).

FIG. 1

Fig. 2

FIG. 3

Fig. 4

FIG. 5

FIG. 6

FIG. 7

FIG. 8

FIG. 9

EP 0 184 890 B1

FIG. 10

FIG. 11

8